# EUROPÄISCHE PATENTSCHRIFT

(11) **EP 2 606 270 B1**
(45) Veröffentlichungstag und Bekanntmachung des Hinweises auf die Patenterteilung: **21.12.2016**
(21) Anmeldenummer: 11754994.9
(22) Anmeldetag: 19.08.2011
(51) Int. Cl.: F16L 37/098

(54) **VERRIEGELUNGSELEMENT FÜR EINEN STECKVERBINDER UND STECKVERBINDER MIT EINEM SOLCHEN VERRIEGELUNGSELEMENT**
LOCKING ELEMENT FOR A PLUG CONNECTOR AND PLUG CONNECTOR HAVING A LOCKING ELEMENT OF THIS KIND
ORGANE DE VERROUILLAGE POUR UN ÉLÉMENT D'ACCOUPLEMENT ET ÉLÉMENT D'ACCOUPLEMENT DOTÉ D'UN TEL ORGANE DE VERROUILLAGE

(30) Priorität: 20.08.2010 DE 102010035027
(43) Veröffentlichungstag der Anmeldung: 26.06.2013
(73) Patentinhaber: Voss Automotive GmbH, 51688 Wipperfürth (DE)
(72) Erfinder: SACHSE, Martin, 51688 Wipperfürth (DE)
(74) Vertreter: Rebbereh, Cornelia
(86) Internationale Anmeldenummer: PCT/EP2011/004187
(87) Internationale Veröffentlichungsnummer: WO 2012/022489

(56) Entgegenhaltungen:
- US-A- 1 029 819
- US-A- 2 805 089
- US-A- 3 428 340
- US-A- 5 772 355

## Beschreibung

Die Erfindung betrifft ein Verriegelungselement für einen Steckverbinder mit einem äußeren Element zum Anordnen auf der Außenseite eines Abschnitts des Steckverbinders, wobei ein in das Innere des äußeren Elements hineinragendes Element vorgesehen ist, sowie einen Steckverbinder mit zumindest einem solchen Verriegelungselement.

Steckverbinder sowie Verriegelungselemente für Steckverbinder sind im Stand der Technik bekannt. Derartige Steckverbinder dienen zum Verbinden bspw. einer Medienleitung mit einem Aggregat in einem Fahrzeug. Um ein Ankuppeln des Steckverbinders an das Aggregat zu ermöglichen und nachfolgend eine Sicherung der Verbindung vorzusehen, sind die Verriegelungselemente vorgesehen. Diese werden zumeist endseitig auf den Steckverbinder aufgesteckt bzw. in diesen eingefügt, um die Verbindung zwischen Steckverbinder und einer weiteren Leitung bzw. dem Aggregat zu sichern.

Aus der DE 1 266 071 ist eine Einrichtung zur Verriegelung eines in ein Kupplungsstück einsteckbaren Anschlussstutzens bekannt, bei dem das Kupplungsstück eine Rille und in Fortsetzung dazu eine die Wand durchbrechende Ausfräsung aufweist. In diese ist ein Sperrelement eingefügt, das durch einen verdrehbaren Ring gelöst werden kann. Das Sperrelement ist eine ringförmige Feder, die einen geraden Teil aufweist, der in der Ausfräsung der Wand des Kupplungsstücks geführt ist und mit einem nach innen gerichteten Mitnehmer in Eingriff steht. Dieser ist auf dem verdrehbaren Ring angebracht und bildet auch die Führung des verdrehbaren Ringes in der Rille des Kupplungsstücks. Entsprechend dieser Druckschrift des Standes der Technik ist somit eine spezielle Art von federelastischen Elementen vorgesehen.

Aus der DE 693 01 264 P2 ist eine Kupplung zur Anpassung an ein außen geriffeltes längliches Bauteil bekannt, wobei die Kupplung ein äußeres Gehäuse aufweist mit einem Ende zur Aufnahme des länglichen Bauteils und einem gegenüberliegenden Ende, durch das die Kupplung mit einer kooperierenden Kupplung verbunden werden kann. Die Kupplung weist ferner einen einteiligen ringförmigen Rückhaltering innerhalb des Gehäuses auf, von welchem mindestens ein Teil in einer senkrecht auf der Achse des länglichen Bauteils stehenden Ebene gedreht werden kann und der mindestens ein von Hand betätigbares Bauteil aufweist, das aus dem Gehäuse heraussteht. Der Rückhaltering kann nicht vom Gehäuse entfernt werden, solange das längliche Bauteil in das Gehäuse eingesteckt ist. Der Rückhaltering besteht aus federndem Material und weist äußere Nockenoberflächen auf. Das äußere Gehäuse weist innere Nockenoberflächen auf, die auf die Nockenoberflächen des Rückhalterings einwirken. Der Rückhaltering weist eine nach innen hervorstehende Oberfächenformation auf, so dass durch das Betätigen des von Hand betätigbaren Bauteils und dessen Drehen in der Ebene die Nockenoberflächen relativ zueinander gedreht werden und der Ring deformiert wird, wodurch die Oberflächenformation nach innen gedrückt wird zwischen eine erste Position und eine zweite Position. In der ersten Position ist die Oberflächenformation relativ stark außen angeordnet, um das Einfügen des geriffelten Bauteils in das Gehäuse und in den Rückhaltering zu ermöglichen, wohingegen in der zweiten Position die Oberflächenformation relativ weit innen angeordnet ist, zwischen benachbarten Riffelungen auf dem länglichen Bauteil liegt und dieses in dem Gehäuse verriegelt.

Aus der DE 24 44 993 C3 ist eine Schlauch- und/oder Rohrkupplung mit einem Kupplungskopf und einer darin einsteckbaren und durch ein Verriegelungselement mit diesem verriegelbaren Tülle bekannt. Das Verriegelungselement besteht aus einem federelastischen, einen Schlitz aufweisenden Ring und die Tülle weist eine Ringnut zur zumindest teilweisen Aufnahme des federelastischen Ringes auf. Ausgehend vom vorgesehenen Schlitz sind zwei entgegengesetzt gerichtete, kreisbogenförmige, den Kupplungskopf umgreifende Federarme am elastischen Ring angeformt. Der Kupplungskopf weist eine schlitzförmige Umfangsöffnung zum Durchstecken sowie eine innere Ringnut zur teilweisen Aufnahme des federelastischen Rings auf.

Aus der DE 73 40 346 U1 ist eine Schlauch- und/oder Rohrkupplung aus zwei miteinander verriegelbaren Kupplungsteilen, nämlich einem Kupplungskopf und einer darin einsteckbaren Tülle, bekannt, wobei die Verriegelung der Kupplungsteile über ein im Kupplungskopf eingesetztes Verriegelungselement erfolgt. Das Verriegelungselement ist ein durch eine radiale Schlitzöffnung unterbrochener federelastischer Ring. An diesem sind zwei etwa von der Schlitzöffnung ausgehende entgegengesetzt ausgerichtete Federarme angeformt, die den Ringmantel im Parallelabstand derart konzentrisch umschlingen, dass der zwischen den Federarmenden verbleibende Sehnenabstand zumindest dem Ringaußendurchmesser entspricht. Der Kupplungskopf weist eine innere Ringnut und eine dieser gegenüberliegende äußere Ringnut mit einer Schlitzöffnung zum Durchstecken des federelastischen Ringes auf. Die Tülle weist kupplungsseitig einen Kegel zur Aufweitung des Ringes und eine hinter dem Kegel befindliche Ringnut zur teilweisen Aufnahme des Verriegelungsringes auf.

Aus der DE 27 17 908 A1 ist eine Schlauch- und/oder Rohrkupplung, bestehend aus einem Kupplungskopf und einer darin einsteckbaren und durch ein Verriegelungselement mit diesem verriegelbaren Tülle, bekannt, bei der das Verriegelungselement aus einem federelastischen, einen Schlitz aufweisenden Ring besteht. An dem Ring sind vom Schlitz ausgehend zwei entgegengesetzt gerichtete, kreisbogenförmige, den Kupplungskopf umgreifende Federarme angeformt. Der Kupplungskopf weist eine schlitzförmige Umfangsöffnung zum Durchstecken sowie eine innere Ringnut zur teilweisen Aufnahme des federelastischen Ringes auf. Die Tülle weist kupplungsseitig eine Ringnut zur zumindest teilweisen Aufnahme des federelastischen Ringes im eingesteckten Zustand der Tülle auf. Auf dem Kupplungskopf ist verschiebbar eine Schutzkappe angeordnet, die nach dem Zusammenstecken von Tülle und Kupplungskopf über den elastischen Ring geschoben werden kann. Der elastische Ring weist an den äußeren Enden seiner Federarme angeformte Griffnocken und die Schutzkappe radial nach außen überstehende Kammern zur Aufnahme auf. Die Schutzkappe weist an ihrem der Tülle abgewandten Endbereich eine innere Ringnut auf, in der ein am Kupplungskopf geformter Ringwulst eingerastet werden kann.

Aus der EP 0 703 397 A1 ist ein Kuppeln von Wellrohren bekannt, enthaltend zumindest eine Hülse, deren Innendurchmesser zumindest gleich dem größten Außendurchmesser des Wellrohres ist, ebenso wie einen Befestigungsring. Der Ring ist vom Umfang her ungleichmäßig und kann radial deformiert werden Er weist zumindest einen Zapfen auf, der nach innen ragt, wobei jeder Zapfen in die Wellstruktur des Wellrohres eingreift, um es axial innerhalb der Hülse zu halten. Durch Drehen des Ringes kann das Einpassen des Zapfens optimiert werden, um eine Radialbewegung des Ringes zu verhindern.

Aus der DE 39 35 839 A1 ist eine Schlauchkupplung bekannt, bei der ein hülsenförmiger Grundkörper mit Kupplungs- und Schlauchanschlussteil vorgesehen ist, wobei der Kupplungsteil in seinem vorderen Bereich eine umlaufende Nut mit Dichtungsring aus elastomerem Werkstoff, in einem Zwischenbereich einen elastisch verformbaren Federarm, der einstückig mit dem Grundkörper verbunden ist, und in seinem Endbereich einen Anschlag aufweist. Ferner ist ein Zusatzteil vorgesehen, der den Kupplungsteil im Bereich des Federarmes außenseitig radial umschließt. Das freie Ende des Federarmes, der zwei nach außen gerichtete Rippen aufweist, zeigt in Richtung auf den Anschlag, wobei die erste Rippe beim Einschieben des Kupplungsteiles in die Stecknut eines Aggregatstutzens in der entsprechenden Hinterschneidung einrastet und die Schlauchkupplung verriegelt. Der Zusatzteil ist als Drehring ausgebildet, der zumindest eine Rampe aufweist, die unter Verkleinerung des Innendurchmessers des Drehringes in die zweite Rippe und somit auch den Federarm nach unten drückt, wodurch die erste Rippe aus der Hinterschneidung freikommt und die Schlauchkupplung entriegelt wird. Hier ist somit kein elastisches Weiten, sondern ein Hineindrehen zum Verrasten bzw. Verriegeln vorgesehen.

Aus der DE 101 41 315 C1 ist eine Kupplung zum Anschluss einer Waschflüssigkeitsleitung in einem Kraftfahrzeug an einem weiteren Bauteil bekannt, wobei ein zur Verbindung zweier Kupplungsteile ausgebildetes Rastelement einen zum Greifen vorgesehenen Mantel mit einem C-förmigen Querschnitt aufweist. Von dem Mantel stehen Rastnasen radial nach innen hinab. Zur Montage und Demontage erfolgt ein Hineindrehen bzw. Herausdrehen, wobei sich der Mantel aufweitet, um die Rastnasen aus der verrasteten Position wieder herausgelangen zu lassen.

Aus der EP 0 926 420 B1 ist ein Kupplungsverbinder mit einer vergrößerten Rückhaltevorrichtung bekannt, wobei die Kupplung einen Körper umfasst, der einen Schlauchverbindungsabschnitt und einen Rohraufnahmeabschnitt und ein Klammerpassteil umfasst, wobei das Klammerpassteil ein darin ausgebildetes Eingriffsloch aufweist. Ferner umfasst die Kupplung eine Klammer, die aus elastischem Material besteht und am Klammerpassteil des Rohraufnahmeabschnitts befestigt werden kann. Die Klammer ist so konfiguriert, dass sie eine Außenrandfläche des Klammerpassteils abdeckt, wobei die Klammer so betätigt werden kann, dass sie das Rohr in einer Position relativ zum Rohraufnahmeabschnitt hält Eine Eingriffsklaue ist an der Innenrandfläche der Klammer angeordnet, um durch das Eingriffsloch des Klammerpassteils hindurch in den Rohraufnahmeabschnitt hineinzuragen, um so das Rohr in Eingriff zu nehmen, das in den Körper eingeführt wurde. Die Klammer umfasst ferner zwei Umfangsenden, die elastisch verformt werden können und einander gegenüberliegen, wobei eines der Umfangsenden einen von einem Bediener betätigbaren Knopf aufweist, der zum Bedienen dient. Es sind somit starre Eingriffsklauen und ein elastischer Ring vorgesehen. Beim Verdrehen verformt sich somit der elastische Ring, wohingegen die Eingriffsklauen lediglich in und aus dem Eingriff in die entsprechend gebildeten Eingriffslöcher wandern.

Die EP 0 719 971 A1 offenbart einen Steckverbinder bzw eine Steckkupplung mit einem Clip, der mit einem entsprechenden ein Entfernen verhindernden Vorsprung zusammenwirkt bzw. zusammenwirken kann, um eine Verriegelung des Steckers in dem Steckverbinder zu ermöglichen. Es ist ein an den Clip angepasster Abschnitt an dem Steckverbinder angeformt an dessen leitungsaufnehmendem Teil, wobei dieser Abschnitt Aufnahmelöcher aufweist. Der Clip besteht aus einem elastisch nachgiebigen Material und ist ringförmig. Der Clip weist zwei Umfangsenden auf, die einander gegenüberliegen. Der Clip ist in einer Richtung ausgerichtet, um seinen Durchmesser zu reduzieren und kann seinen Durchmesser vergrößern, um auf den an den Clip angepassten Abschnitt zu passen. Eingriffsklauen sind auf der Innenseite des Clips geformt und können'in die Eingriffslöcher eingreifen. Wenn der Clip gedreht wird, entfernen sich die Eingriffsklauen aus den entsprechenden Eingriffslöchern aufgrund von vorgesehenen schrägen seitlichen Flächen der Klauen.

Aus der EP 0 530 485 B1 ist eine lösbare Schnellverbindung bekannt, wobei ein Schnellverbindungstück mit Fingerdrucklösemechanismus vorgesehen ist, das für einen wahlweisen Verriegelungseingriff in ein Steckglied angepasst ist. Das Verbindungsstück umfasst einen ringförmigen Haltering, der konzentrisch zu einem zylindrischen länglichen Körperabschnitt angeordnet ist. Zwei umfangsseitig einander gegenüberliegende parallele und axial verlängerte Balkenelemente verbinden den Haltering und den Körperabschnitt miteinander, wobei jedes Balkenelement an seinem einen Ende mit dem Haltering und an seinem entgegengesetzten Ende mit einer Halterung verbunden ist, die sich auf dem Körperabschnitt befindet. Zwei umfangsseitig mit Abstand angeordnete Arretierungen, die sich von dem Haltering nach innen erstrecken, sind ebenfalls vorgesehen, um eine sich nach außen erstreckende Anschlagfläche aufzunehmen, um einen Formschluss zwischen Schnellverbindungsstück und Steckglied zu bewirken. Ein Lösen des Steckgliedes erfolgt durch Zusammendrücken des Halteringes.

Die FR 2 935 167 A1 offenbart einen aus zwei Teilen zusammengefügten Steckverbinder, wobei beide Teile jeweils einen Endabschnitt aufweisen, der mit Befestigungselementen versehen ist, um eine irreversible Bajonettverbindung herzustellen. Der Endabschnitt des ersten Teils enthält zumindest einen radial vorspringenden Zapfen und der Endabschnitt des zweiten Teils enthält eine Nut zur Aufnahme des Zapfens, enthaltend ein Eingangsteilstück, das sich in ein vertieftes Teilstück erstreckt, im Wesentlichen in Umfangsrichtung des Steckverbinders. Die Nut enthält ein bewegliches Wandelement, das eine abgesenkte Position einnehmen kann, um den Zapfen von dem Eingangsteilstück in das vertiefte Teilstück eintreten zu lassen, und eine vorspringende Position, um den Zapfen dazu zu bewegen, aus dem vertieften Teilstück herauszutreten, wobei der Steckverbinder Einrichtungen aufweist, um das Wandelement in der vorspringenden Position zu halten. Die Haltelemente umfassen eine elastische Rückstelleinrichtung des Wandelements zum Rückstellen in seine vorspringende Position. Das Wandelement kann elastisch deformierbar sein und aus seiner vorspringenden Position in seine versenkte Position gelangen. Anstelle von elastisch deformierbaren vorgespannten Wandelementen ist in dieser Druckschrift des Standes der Technik ferner offenbart, bei einem nicht beweglichen Wandelement die Irreversibilität der Bajonettverbindung durch Aufbringen von Wärme oder Kälte nach dem Zusammenfügen der beiden Steckverbinderteile auf die entsprechende Wandung, die den jeweiligen Zapfen halten soll, vorzusehen.

Die US 2,805,089 A offenbart einen Leitungsverbinder mit einem keilförmigen Federring-Sperrklinkenmittel. Hierbei weist ein Kupplungsteil des Leitungsverbinders eine Bohrung auf, in der eine innere Nut mit einem im Querschnitt halbkreisförmigen Abschnitt und einem geneigten Abschnitt ausgebildet ist. Ferner weist das Kupplungsteil eine ringförmige äußere Nut auf, die zwei geneigte Wände umfasst. Dieser Teil des Kupplungsteils trägt ferner einen Spaltring aus Federstahl mit einem kreisförmigen Querschnitt. Im nicht gebogenen Zustand ist der Ring teilweise in der inneren Nut und teilweise in der äußeren Nut angeordnet. Dementsprechend ist der Ring zwischen der vorderen Wand der Nut im Steckerelement und der vorderen geneigten Wand des Kupplungsteils angeordnet. Die Enden des Ringes weisen radial angeordnete Abschnitte auf, die sich nach außen durch einen Schlitz des Kupplungsteils erstrecken. Eine Hülse weist einen Ausschnitt auf, der das eine Ringende aufnimmt und sieht zum Eingriff damit eine Schulter vor. Die Hülse wird gegen ein Entfernen durch einen aufschnappbaren Ring gehalten und wird gedreht, um das Ringende weg von dem anderen Ringende zu bewegen, so dass der Ring sich ausdehnt und dadurch aus der Nut in den Abschnitt hinein gelangt, in dem das Steckerelement durch die Feder aus seiner Verrastungsposition gebracht wird.

Aus der US 5,772,355 A ist ein Okularadaptermechanismus zum Herstellen einer schnellen Verbindung zu einem Schnittstelleninstrument, wie einem Endoskop, bekannt. Der Adapter weist eine feste rückwärtige Platte zum Vorsehen einer Befestigung für den Mechanismus vor. Eine C-Clip-Rückhalteeinrichtung ist innerhalb einer umfangsseitigen Kammer der rückwärtigen Platte angeordnet und wirkt als Verriegelungsring unter elastischer Krafteinwirkung des Materials des C-Clips, um nach der Montage in der rückwärtigen Platte einen Halt um das Schnittstelleninstrument herum vorzusehen. Ein nach außen weisender vorstehender Abschnitt des C-Clips, der als Hebeeinrichtung wirkt, löst das Schnittstelleninstrument, sobald er in Richtung eines feststehenden Stiftes bewegt wird, der in einem vorbestimmten Abstand zu ihm angeordnet ist.

Aus der US 3,428,340 A ist ein Leitungsverbinder mit einem Kupplungselement, das ein Steckerelement aufnimmt, bekannt. Die Elemente werden zusammengehalten durch ein nachgiebiges Drahtverschlusselement. Ein Kragen ist an dem Kupplungselement zum Lösen der Elemente vorgesehen. Der Leitungsverbinder weist einen verdeckten selbstverschließenden Mechanismus auf, der lösbar ist durch eine einfache Drehbewegung.

Die US 1,029,819 A offenbart einen Leitungsverbinder, bei dem am Ende eines Kupplungselementes zwei einander gegenüberliegend angeordnete Bajonettaussparungen vorgesehen sind, deren Transversalabschnitte schräg in Richtung eines Packrings verlaufen, wobei sie einen Nippel des Leitungsabschnitts fest gegen den Ring drücken, sobald der Nippel mit dem Kupplungselement verbunden wird. Der Nippel umfasst einen Verschlussstift, der in die Bajonettaussparungen eingreift. Schnappverbindungsteile ragen durch das Kupplungselement in den transversalen Abschnitt der Bajonettaussparungen hinein, wobei sie in die Aussparungen durch Federelemente hinein gedrückt werden, die auf der Außenseite des Kupplungselements befestigt sind. Ein Ende des Federelements ist durch einen Stift befestigt und das freie Ende bewegt sich leicht nach außen, um mit Hebenocken ineinanderzugreifen. Durch Einfügen des Nippels in das Kupplungselement, wobei die Schnappverbindungsteile in die Bajonettaussparungen gedrückt werden, und durch leichtes Drehbewegen des Nippels gleiten die Stifte über das Schnappverbindungsteil und dieses schnappt zurück und hält den Nippel davon ab, sich aus dem Kupplungselement heraus zu bewegen, wenn die Stifte sich am Schnappverbindungsteil vorbei bewegen. Für das Lösen der Verbindung wird eine Hülse verwendet, die lose auf dem Kupplungselement befestigt wird, wobei die Hülse einen zentralen Ring, endseitige Ringe und einen entfernbaren frontseitigen Ring umfasst. Die einzelnen Ringe werden zusammengehalten, um sich als ein Körper zu bewegen. Der zentrale Ring weist auf einander gegenüberliegenden Seiten Rücksprünge auf, in denen freie Enden der Feder Spiel haben, wenn sie herausgedrückt werden durch diametral gegenüberliegende Hebenocken, wobei sie Messerkanten aufweisen, um unter das freie Ende der Feder zu greifen, wenn der Ring auf dem Kupplungselement gedreht wird.

Alle vorstehend beschriebenen Verriegelungseinrichtungen des Standes der Technik sind zumeist recht komplex geformt und erfordern daher bei der Herstellung ein kompliziert ausgeformtes Werkzeug, oder sie bedeuten eine irreversible Verbindung, wie bei der FR 2 935 167 A1.

Der vorliegenden Erfindung liegt nun die Aufgabe zugrunde, ein Verriegelungselement sowie einen Steckverbinder mit einem solchen Verriegelungselement vorzusehen, das einfacher geformt ist, so dass Werkzeugkosten reduziert werden können und eine verliersichere und einfache Montage des Verriegelungselements an dem Steckverbinder möglich ist, wobei die Steckverbindung einfach, ergonomisch bzw. intuitiv und ohne Verwendung eines Werkzeugs lösbar sein und eine automatische Bereitschaft zur Wiederholmontage aufweisen soll, also direkt nach dem Lösen der Steckverbindung eine erneute Montage wieder möglich sein soll.

Die Aufgabe wird für ein Verriegelungselement für einen Steckverbinder, wie er im Anspruch 1 beansprucht ist, gelöst. Die Aufgabe wird ferner für einen Steckverbinder mit den Merkmalen des Anspruchs 10 gelöst.

Weiterbildungen der Erfindungen sind in den abhängigen Ansprüchen definiert.

Dadurch wird ein Verriegelungselement für einen Steckverbinder mit einem äußeren Element zum Umgreifen eines endseitigen Abschnitts des Steckverbinders geschaffen, bei dem das Verriegelungselement auf den Abschnitt des Steckverbinders axial aufgeschoben bzw. aufgesteckt wird, wodurch es nach dem Einbau verliersicher ist, und nachfolgend rotatorisch bewegt wird, um die innerhalb des teilringförmigen Halteelements gebildete innere Öffnung zum Entfernen eines Steckers mit umlaufendem Halteflansch aufweiten zu können bzw. um ein Verriegeln des Steckers innerhalb des Steckverbinders dadurch zu ermöglichen, dass das Verriegelungselement wieder entlastet wird, somit in seine Ausgangsposition zurückkehrt. In dieser weist die innere Öffnung wieder einen solch geringen Durchmesser auf, dass der Halteflansch des Steckers nicht aus der Öffnung herausgelangen kann. Zum Vergrößern der inneren Öffnung durch Aufweiten des teilringförmigen Halteelements stützt sich die Abstützfläche oder der Abstützabschnitt an einer Fläche des Stützelementes des Steckverbinders ab. Das äußere Element bleibt dabei im Wesentlichen deformationsfrei. Die Abstützfläche und/oder der Abstützabschnitt können am oder im Bereich des distalen Endes des Haltelements vorgesehen sein. Unter einem distalen Ende wird hier das von dem Verbindungssteg entfernte freie Ende des Halteelements verstanden. Die Abstützfläche(n) und/oder der oder die Abstützabschnitt(e) kann/können auch im Bereich zwischen dem Verbindungssteg und dem distalen Ende des Haltelementes angeordnet sein. In jedem Fall ist hierbei ein Abstützen an dem Stützelement des Steckverbinders zum Entriegeln des Verriegelungselements und somit zum Lösen und Entnehmen des Steckers möglich. In der ruhenden entspannten Ausgangsposition verriegelt das Verriegelungselement somit den Stecker und in der gespannten Öffnungsposition, in der sich die zumindest eine Abstützfläche oder der zumindest eine Abstützabschnitt an dem Stützelement des Steckverbinders abstützt, ist eine Entnahme des Steckers möglich, da die innere Öffnung des Haltelements vergrößert ist und somit einen ausreichenden Durchmesser zur Entnahme des Steckers freigibt. Wird das Verriegelungselement wieder entlastet, dreht sich dieses selbständig wieder in seine verriegelnde Position zurück.

Durch das Vorsehen der Kombination aus einem geschlossenen starren Ringelement als einer Ausführungsvariante des äußeren Elements und dem federelastischen teilringförmigen Halteelement, das sich im Inneren des Ringelements, also in dem vom Ringelement umschriebenen Innenraum, befindet, ist auf dem Steckverbinder, insbesondere dem endseitigen Abschnitt des Steckverbinders, ein sicherer Halt des Verriegelungselementes möglich. Zugleich ist aufgrund des federelastischen teilringförmigen Halteelements ein nachgiebiges Element vorgesehen, das ein leichtes Einfügen eines Steckers mit außenseitigem Flansch in den Steckverbinder ermöglicht, wobei das teilringförmige Halteelement dabei zurückweicht, zugleich jedoch ein ungewolltes Entnehmen des Steckers aus dem Steckverbinder sicher vermeidet. Da von der Außenseite des Verriegelungselementes her bei Vorsehen eines geschlossenen Ringelements keine Nocken oder anderen Elemente vorstehen, besteht auch nicht die Gefahr eines versehentlichen Drehens und somit Freigebens der inneren Öffnung des Verriegelungselementes, wie dies ggfs. bei den Lösungen des Standes der Technik geschehen kann. Ferner ist es möglich, aus jeder beliebigen Position heraus das Verriegelungselement zu lösen, was bei den Lösungen des Standes der Technik mit den nach außen geführten Betätigungselementen bzw. Nocken nicht möglich ist.

Grundsätzlich ist es allerdings ebenfalls möglich, anstelle eines geschlossenen Ringelements lediglich ein teilringförmiges äußeres Element und an diesem ein Betätigungselement vorzusehen. Hier erfolgt eine Betätigung zum Vergrößern der inneren Öffnung des Verriegelungselements dann durch Angreifen an dem Betätigungselement und Drehen um den Umfang des Steckverbinders herum. Auch dieses teilringförmige äußere Element wird axial montiert und ist nach dem Einbau dadurch verliersicher, dass es auch nur axial wieder entfernt werden könnte.

Das Verriegelungselement wird insbesondere endseitig auf einen Abschnitt des Steckverbinders axial aufgeschoben. Mit seinem äußeren Element legt es sich dabei auf der Außenseite des Abschnitts an und greift mit seinem federelastischen teilringförmigen Halteelement in das Innere dieses Abschnitts hinein, wobei der Verbindungssteg zwischen dem teilringförmigen Halteelement und dem äußeren Element durch eine vorteilhaft vorgesehene Schlitzöffnung im Abschnitt des Steckverbinders hindurch geführt wird und zunächst einmal in dieser Schlitzöffnung angeordnet ist.

Weiter vorteilhaft ist zumindest eine längliche Wandungsöffnung in Verbindung mit der Schlitzöffnung vorgesehen zum Einfügen des jeweiligen Verbindungsstegs zwischen äußerem Element und teilringförmigem Halteelement und zum Vergrößern der sich innerhalb des teilringförmigen Halteelements erstreckenden inneren Öffnung zur Demontage eines dort eingefügten Steckers. Solange der Verbindungssteg in der Schlitzöffnung angeordnet ist, befindet sich das Verriegelungselement vorteilhaft in einer Verdrehsicherungsposition, so dass ein eingefügter Stecker nicht versehentlich entnommen werden kann. Um den Stecker entnehmen zu können, wird der Verbindungssteg in die Wandungsöffnung verschoben. Der Verbindungssteg bewegt sich beim Rotieren des äußeren Elementes aufgrund des endseitigen Abstützens an dem Stützelement des Steckverbinders in Richtung der Umfangswandung von diesem. Das distale Ende des teilringförmigen Halteelements stützt sich beim Rotieren des äußeren Elements bspw. entgegen dem Uhrzeigersinn - oder in einer anderen Ausführungsvariante im Uhrzeigersinn - an dem Stützelement in dem Steckverbinder ab, so dass beim weiteren Rotieren der Verbindungssteg sich innerhalb der länglichen Wandungsöffnung bewegt und somit das teilringförmige Halteelement sich in Richtung der äußeren Umfangswandung des Abschnitts des Steckverbinders bewegt auf dem das Verriegelungselement angeordnet ist. Wird umgekehrt das äußere Element wieder entlastet, löst sich das distale Ende des teilringförmigen Halteelements von dem Stützelement und kehrt in seine Ausgangsposition zurück, in der die innere Öffnung durch das teilringförmige Halteelement wiederum verkleinert und somit eine Demontage des Steckers aus dem Steckverbinder heraus verhindert wird. Bei erfolgter Demontage des Steckers kann eine Wiederholungsmontage, also das Einnehmen der Ausgangsposition, ohne Einsatz von Werkzeugen realisiert werden.

Das teilringförmige Halteelement kann sich über einen Winkel von mehr als 30°, vorzugsweise mehr als 270°, erstrecken. Hierbei wird ein auskragender Flansch eines in den Steckverbinder eingesteckten Steckers nahezu vollständig hintergriffen und gegen eine Entnahme aus dem Steckverbinder gesichert. Es können jedoch auch bspw. zwei teilringförmige Halteelemente vorgesehen werden, die über einen jeweiligen Verbindungssteg mit dem äußeren Element verbunden sind. Das äußere Element ist in diesem Falle vorteilhaft als geschlossenes Ringelement ausgebildet, das als stabiles Element auf der Außenseite des bspw. endseitigen Abschnitts des Steckverbinders angeordnet wird. Die beiden teilringförmigen Halteelemente greifen dann in das Innere dieses Abschnitts des Steckverbinders ein, wobei sie sich vorteilhaft nahezu zu einem vollständigen Ring ergänzen. Zwischen diesen beiden teilringförmigen Halteelemente wird wiederum eine innere Öffnung gebildet, in die ein Stecker eingesteckt werden kann, der sich nachfolgend mit seinem auskragenden Flansch an den beiden federelastischen teilringförmigen Halteelementen abstützt, um eine ungewollte Entnahme des Steckers aus dem Steckverbinder zu verhindern. Die beiden teilringförmigen Halteelemente sind bezüglich ihrer jeweiligen Verbindungsstege bspw. mit einem Versatz von etwa 180° zueinander angeordnet, also die beiden Verbindungsstege etwa einander gegenüberliegend. Die distalen Enden der beiden teilringförmigen Halteelemente liegen dann mit Abstand zu dem jeweiligen Verbindungssteg des anderen teilringförmigen Halteelements, wobei dieser Abstand anwendungsspezifisch variiert werden kann.

Die beiden teilringförmigen Halteelemente können mit einer über ihre Längserstreckung hinweg ungleichmäßigen Breitenerstreckung versehen sein. Im Bereich des jeweiligen Verbindungssteges weisen sie jeweils vorteilhaft die geringste Breitenerstreckung und am distalen Ende die größte Breitenerstreckung auf. Hierdurch wird im Bereich des Verbindungssteges eine ausreichend große Federelastizität geschaffen und über die Längserstreckung des teilringförmigen Halteelementes hinweg eine ausreichend große Stabilität, insbesondere im distalen Endbereich des Halteelementes.

Die beiden teilringförmigen Halteelemente können zumindest endseitig, insbesondere endseitig und im mittleren Bereich ihrer Längserstreckung, mit einem Abstützelement mit Abstützfläche und/oder einem Abstützzapfen mit Abstützfläche zum Eingreifen in eine entsprechend geformte Nut, Spur oder Rücksprung in dem Steckverbinder versehen sein. Durch das Vorsehen derartiger Abstützelemente bzw. Abstützzapfen ist ein Abstützen der entsprechenden Abstützflächen innerhalb des Steckverbinders möglich, um beim Rotieren des äußeren Elementes die sich zwischen den beiden teilringförmigen Halteelementen erstreckende Öffnung für die Entnahme eines Steckers aus dem Steckverbinder vergrößern zu können. Hierbei wirken dann also Abstützelemente bzw. Abstützzapfen und Nuten, Spuren bzw. Rücksprünge des Steckverbinders zusammen. Insbesondere können in dem Steckverbinder sich einseitig verjüngende und mit einer endseitigen Stützfläche versehene Nuten, Spuren oder Rücksprünge vorgesehen sein, insbesondere vier Nuten, wobei die Abstützelemente oder -zapfen der teilringförmigen Halteelemente in die Nuten, Spuren oder Rücksprünge eingreifen oder eingreifen können.

Bei Vorsehen von zwei teilringförmigen Halteelementen können somit mehrere Nuten, insbesondere vier Nuten, im Steckverbinder vorgesehen sein, so dass sich die beiden endseitigen Abstützelemente mit ihren Abstützflächen oder - abschnitten entsprechend an Stützflächen in den Nuten des Steckverbinders abstützen können und auch die im mittleren Bereiche der Längserstreckung der jeweiligen Halteelemente vorgesehenen Abstützelemente bzw. -zapfen sich mit ihren Abstützflächen oder -abschnitten an ebenfalls jeweils zwei Stützflächen in den Nuten des Steckverbinders abstützen können. Durch das Vorsehen von sich einseitig verjüngenden Nuten, Spuren etc. in dem Steckverbinder ist es möglich, bei der Drehbewegung in Richtung weg von den Stützflächen die Abstützelemente bzw. -zapfen entlang der Nuten-, Spuren- oder Rücksprungkontur zu leiten, auch im mittleren Bereich bei den dort angeordneten Abstützelementen der teilringförmigen Halteelemente. Durch das Leiten der Abstützelemente bzw. -zapfen entlang der sich ändernden Kontur werden die teilringförmigen Halteelemente aus dem Inneren des Verriegelungselementes heraus gedrückt, so dass sich die zwischen den teilringförmigen Halteelementen gebildete innere Öffnung vergrößert und der Stecker freigegeben und demontiert werden kann.

Das oder die teilringförmigen Halteelement(e) können mit einer quer zu ihrer Längserstreckung gerichteten Fase versehen sein. Durch das Vorsehen einer solchen Fase bzw. Anfasung der teilringförmigen Haltelemente bzw. des teilringförmigen Halteelementes ist es möglich, durch Zusammenwirken mit einem vorteilhaft im Bereich des Steckverbinders vorgesehenen Sicherungsring auch bei Drehen des Verbindungselementes zur Demontage eines Steckers in dem Steckverbinder stets eine gleichmäßige axial gerichtete Haltekraft auf das teilringförmige Halteelement auszuüben. Ein solcher Sicherungsring wird zum axialen Sichern des Verriegelungselementes an dem Steckverbinder angeordnet. Der Sicherungsring kann zumindest eine in Richtung des teilringförmigen Halteelementes weisende angefaste Wandung aufweisen, an der das Halteelement angelagert werden kann. In diesem Falle kann sich eine Kante des Verriegelungselementes im Bereich des teilringförmigen Halteelementes an dieser schräg verlaufenden angefasten Wandung abstützen, so dass, die bereits in Bezug auf die an dem teilringförmigen Halteelement vorgesehene Fase erwähnten Vorteile einer besonders guten Sicherung des Verriegelungselementes an dem Steckverbinder auch hier ermöglicht werden.

Das äußere Element kann, wie bereits erwähnt, als geschlossenes Ringelement ausgebildet sein. Ebenfalls ist es möglich, das äußere Element teilringförmig auszubilden und am äußeren Element ein Betätigungselement anzuordnen. Das teilringförmig ausgebildete äußere Element lagert dann auf der Außenseite des entsprechenden Abschnitts des Steckverbinders auf, wobei das distale Ende des teilringförmigen Halteelementes, das einstückig mit dem Verbindungssteg und dem äußeren Element ausgebildet sein kann, das Abstützelement mit Abstützfläche oder-abschnitt aufweist, die oder der sich an einem entsprechenden Stützelement in einer Außenwandung des Steckverbinders abstützen kann. Das Abstützelement kann dabei durch eine benachbart zu diesem Stützelement angeordnete Öffnung in der Außenwandung des entsprechenden Abschnitts des Steckverbinders angeordnet werden. Auch hier weitet sich beim Betätigen des Betätigungselementes, also bei dem Bewegen desselben im Uhrzeigersinn oder in Gegenuhrzeigerrichtung, das teilringförmigen Halteelement auf, so dass sich die von diesem umschriebene innere Öffnung vergrößert, um einen eingeführten Stecker auch wieder aus dem Steckverbinder entnehmen zu können.

Ist das äußere Element als geschlossenes Ringelement ausgebildet, kann dieses auf seiner Außenseite mit einer das rutschfeste Angreifen verbessernden Oberfläche versehen sein, insbesondere mit einer geriffelten und/oder genoppten und/oder mit Überhöhungen versehenen Oberfläche. Hierdurch ist es vorteilhaft möglich, besonders gut an einem solchen als geschlossenes Ringelement ausgebildeten äußeren Element angreifen zu können, um eine Betätigung hier vorzunehmen. Grundsätzlich ist es jedoch auch möglich, eine glatte Oberfläche vorzusehen, die beispielsweise jedoch rau bzw- besonders weich ausgebildet werden kann, um eine hohe Reibung beim Angreifen zu erzeugen, so dass auch hierdurch ein besonders guter Halt durch die angreifenden Finger einer Hand eines Benutzers und somit eine besonders sichere Betätigung möglich ist.

Es ist somit eine axiale Bewegung des teilringförmigen Halteelementes aufgrund der federnden Anordnung über den Verbindungssteg an dem geschlossenen Ringelement als äußerem Element möglich. Es ist dabei eine Nachgiebigkeit und somit eine gute Steckbarkeit für einen Stecker beim Einfügen in den Steckverbinder einerseits, jedoch ansonsten eine Verdrehsicherung des Verriegelungselements für den Betrieb möglich. Das Verriegelungselement wird ferner verliersicher an dem Steckverbinder angebracht durch Vorsehen des Sicherungselementes. Nachfolgend kann ein Stecker mit Flansch, bspw. ein sogenannter SAE-Stecker mit Profilkontur SAE J2044, in den Steckverbinder gesteckt und darin ohne weitere Hilfsmittel nach dem Durchtritt durch das Verriegelungselement verriegelt werden. Das Verriegelungselement selbst wird axial an dem Steckverbinder montiert. Nach der Demontage des Steckers oder vor dessen Einfügen in den Steckverbinder wird aufgrund der Federelastizität des Halteelements dessen Ausgangsposition selbständig (wieder) eingenommen.

Durch eine Keilform bzw. angefaste Wandung des Sicherungsrings kann eine verstärkte Kraft auf das oder die ebenfalls im Querschnitt keilförmig ausgebildeten teilringförmigen Halteelemente ausgeübt werden. Ein solcher Sicherungsring kann für die vorstehend genannten Ausführungsvarianten von teilringförmigen Halteelementen verwendet werden.

Der Sicherungsring kann formschlüssig, stoffschlüssig, durch Reib- und/oder Laserschweißen oder kraftschlüssig mit dem entsprechenden das Verriegelungselement tragenden Abschnitt des Steckverbinders verbunden werden.

Ein Öffnen des Verriegelungselements zur Entnahme des Steckers aus dem Steckverbinder ist also durch Drehen des Verriegelungselements, somit auf einfache Art und Weise möglich. Ferner kann durch das Vorsehen des geschlossenen Ringelementes als äußerem Element sogar der das Verriegelungselement tragende endseitige Abschnitt des Steckverbinders zusätzlich isoliert werden, da in dem geschlossenen Ringelement auch ein Luftraum eingeschlossen werden kann, der eine Isolierwirkung zeigt. Bei Vorsehen eines lediglich teilringförmigen äußeren Elementes mit endseitigem Betätigungselement verbleibt der restliche Querschnitt bzw. die restliche Umfangsmantelfläche des mit dem Verriegelungselement versehenen Abschnitts des Steckverbinders frei, so dass hier beispielsweise Heizdrähte oder andere Einrichtungen zum Beheizen vorgesehen werden können.

Bei dem mit zwei teilringförmigen Halteelementen versehenen Verriegelungselement, bei dem Abstützelemente bzw. -zapfen in sich verjüngende Nuten o.ä. des Steckverbinders eingreifen und entlang von diesen bewegbar sind und in der Nut etc. geführt werden, dient die Reduzierung der Nut über deren Längserstreckung hinweg (sich verjüngende Nut) als Führungskontur für das oder die Abstützelemente bzw. -zapfen.

Zur näheren Erläuterung der Erfindung werden im Folgenden Ausführungsbeispiele von dieser näher anhand der Zeichnung beschrieben. Diese zeigen in:
- Figur 1: eine Explosionsansicht eines Steckverbinders mit Stecker sowie einer ersten Ausführungsform eines nicht erfindungsgemäßen Verriegelungselementes,
- Figur 2: eine Längsschnittansicht des Steckverbinders mit Stecker und Verriegelungselement gemäß Figur 1,
- Figur 3: eine Draufsicht auf eine zweite Ausführungsform eines erfindungsgemäßen Verriegelungselementes,
- Figur 4: eine Längsschnittansicht durch einen mit Stecker und dem Verriegelungselement gemäß Figur 3 versehenen Steckverbinder, wobei der Schnitt bzgl. des Verriegelungselements entlang der Linie C-C liegt.
- Figur 5: eine Explosionsansicht des Steckverbinders mit Stecker und Verriegelungselement gemäß Figur 4,
- Figur 6: eine Querschnittsansicht durch den Steckverbinder gemäß Figur 4 entlang der Linie D-D im Bereich des Verriegelungselements,
- Figur 7: eine Querschnittsansicht einer weiteren Ausführungsform eines nicht erfindungsgemäßen Verriegelungselementes in Anbringung an einem Steckverbinder,
- Figur 8: eine Querschnittsansicht einer weiteren Ausführungsform eines erfindungsgemäßen Steckverbinders mit äußerer Beheizung und Verriegelungselement, und
- Figur 9: eine Längsschnittansicht entlang der Linie A-A durch den Steckverbinder gemäß Figur 8

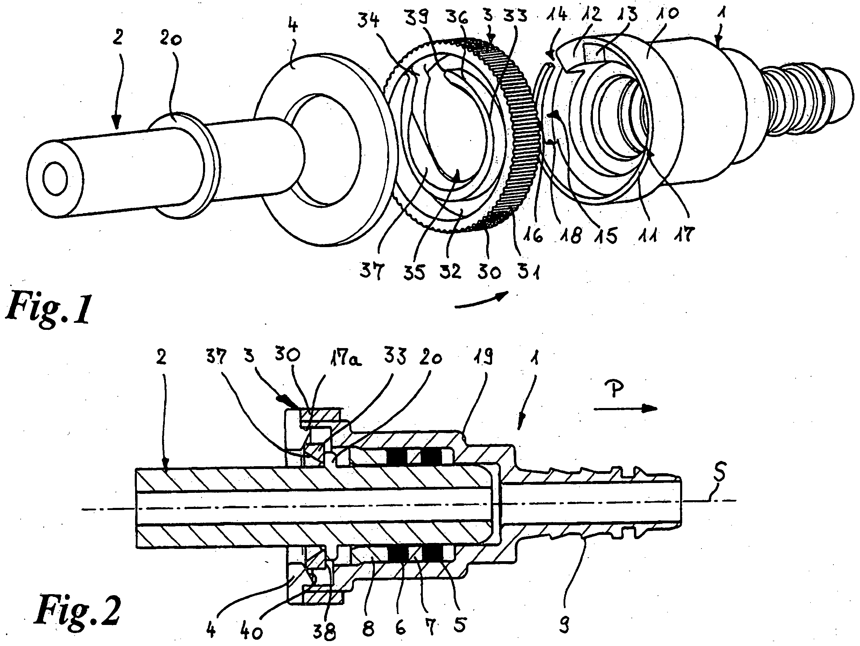

Figur 1 zeigt eine Explosionsansicht eines Steckverbinders 1 mit einzufügendem Stecker 2 und auf den Steckverbinder 1 aufzufügendem Verriegelungselement 3. Ferner ist ein Sicherungsring 4 vorgesehen, der das Verriegelungselement an dem Steckverbinder 1 sichern soll. Das Verriegelungselement 3 weist ein geschlossenes äußeres Element, das als Ringelement 30 ausgebildet ist, auf. Dieses ist auf seiner Außenseite mit einer geriffelten Außenfläche 31 versehen, um eine besonders rutschsichere Angreifbarkeit zu ermöglichen. In dem von dem geschlossenen Ringelement 30 umschlossenen Innenraum 32 ist ein federelastisches teilringförmiges Halteelement 33 angeordnet. Das teilringförmige Halteelement ist mit dem geschlossenen Ringelement über einen Verbindungssteg 34 verbunden. Das teilringförmige Halteelement 33 erstreckt sich über einen Winkelumfang von mehr als 30 °, insbesondere mehr als 270 °, bspw. 330°, ist also nicht als Vollring ausgebildet, jedoch erstreckt es sich über einen größeren Winkelumfang als 30 °. Hierdurch kann ein an dem Stecker 2 vorgesehener auskragender umlaufender Flansch 20 nach dem Einfügen des Steckers in den Steckverbinder abgestützt werden. Um den Stecker in den Steckverbinder mit aufgefügtem Verriegelungselement einstecken zu können, umringt das teilringförmige Halteelement 33 eine innere Öffnung 35.

Um das Verriegelungselement 3 an dem Steckverbinder befestigen zu können, weist dieser einen entsprechend ausgebildeten endseitigen Abschnitt 10 auf, auf den das Verriegelungselement mit seinem geschlossenen Ringelement 30 axial aufgeschoben werden kann. Der endseitige Abschnitt weist eine Umfangswandung 11 auf. Diese ist in einem Teilbereich 12 verdickt ausgebildet und mit einer Stützfläche 13 versehen. An dieser Stützfläche kann sich nach der Montage des Verriegelungselementes an dem Steckverbinder eine Abstützfläche 39 des distalen Endes 36 des teilringförmigen Halteelementes 33, also des vom Verbindungssteg 34 entfernten Endes, abstützen. Um ein ungewolltes Lösen durch Wegwandern der Abstützfläche 39 bzw. des distalen Endes 36 nach innen in die innere Öffnung 35 hinein zu vermeiden, kann die Stützfläche mit einem Hinterschnitt oder einer anderweitigen ein Abgleiten oder Auswandern des distalen Endes 36 bzw. der Abstützfläche 39 verhindernden Formgebung versehen sein. Um den Verbindungssteg an dem endseitigen Abschnitt 10 des Steckverbinders montieren zu können, ist die Umfangswandung 11 nicht vollflächig ausgebildet, sondern weist einen Spalt 14 auf, der so breit ausgebildet ist, dass der Verbindungssteg 34 dort eingefügt werden kann. Der Spalt setzt sich in Umfangsrichtung in eine Wandungsöffnung 15 fort, die endseitig bezüglich des endseitigen Abschnitts 10 und somit des Steckverbinders 1 von einem Steg 16 begrenzt wird. Zwischen dem Ende des Steges 16 und dem verdickten Teilbereich 12 ist der Spalt 14 gebildet. Grundsätzlich kann der Steg 16 entfallen, wobei dann allerdings keine Sperrung des Verriegelungselements in der eingefügten Position mehr möglich ist.

Endseitig an dem endseitigen Abschnitt 10 ist eine Frontfläche 17 vorgesehen, die nach dem axialen Aufschieben des Verriegelungselementes 3 auf den endseitigen Abschnitt 10 des Steckverbinders 1 zum Verbinden mit dem Sicherungsring 4 dient. Jedoch kann hierzu nicht nur die Frontfläche 17, sondern auch eine Kontaktfläche 17a zwischen Sicherungsring 4 und dem Gehäuse 19 des Steckverbinders dienen. Ein Verbinden ist beispielsweise durch Klebstoff möglich, wobei ebenfalls Verhakungs- oder Rastelemente hier vorgesehen werden können. Die Kontaktfläche 17a kann auch innenliegend sein, so dass sich ein Verhaken oder Verrasten dann sehr gut vorsehen lässt. Eine Verbindung kann ferner beispielsweise über Laserschweißen erfolgen. Ebenso sind andere Verbindungsarten möglich, wie beispielsweise ein Formschluss, Stoffschluss, Kraftschluss oder beispielsweise auch ein Reibschweißen

In figur 2 ist eine Querschnittsansicht des fertig montierten Steckverbinders mit Verriegelungselement, Sicherungsring und eingefügtem Stecker gezeigt. Vor dem axialen Auffügen des Verriegelungselementes werden zur Befestigung und zum Abdichten des Steckers im Steckverbinder 2 mit Abstand zueinander angeordnete Dichtringe 5, 6, z.B. O-Ringe, mit dazwischen angeordneter Distanzbuchse 7 vorgesehen, ebenso wie eine Abschlussbuchse 8, die die beiden Dichtringe mit der Distanzbuchse innerhalb des Steckverbinders hält. Die Abschlussbuchse kann zum Befestigen einen Hinterschnitt aufweisen, wie in Figur 2 angedeutet, formschlüssig, stoffschlüssig, kraftschlüssig oder durch Reib- oder Laserschweißen in dem Steckverbinder befestigt werden.

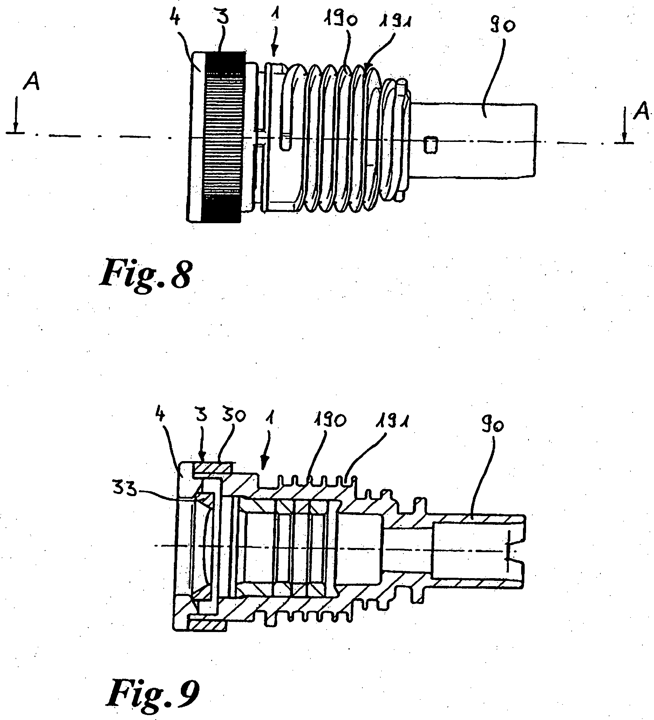

Zum Verbinden mit beispielsweise einer Schlauch- oder Rohrleitung weist der Steckverbinder bzw. das Gehäuse 19 des Steckverbinders ferner ein endseitiges Dornprofil 9 auf, auf das die Leitung aufgeschoben werden kann. Aufgrund der dornartig vorstehenden Elemente hält die Leitung hier besonders gut fest, wie an sich im Stand der Technik bekannt. Ferner kann hier eine Hülse, insbesondere eine lasertransparente Hülse 90, zum Verbinden über Laserschweißen oder Reibschweißen vorgesehen werden, wie in Figur 8 bzw. 9 gezeigt.

Wie besonders gut der Querschnittsansicht in Figur 2 entnommen werden kann, hintergreift das teilringförmige Halteelement 33 den vorkragenden Flansch 20 des Steckers 2. Hierdurch wird der Stecker gegen ein Herausziehen aus dem Steckverbinder gesichert. Im Querschnitt weist das teilringförmige Halteelement 33 eine Keilform auf, ist also mit einer angefasten Wandung versehen. Diese Fase 37 verjüngt sich in Steckrichtung P des Steckers 2. Durch das Vorsehen der Fase ist es möglich, beim Einstecken des Steckers 2 in Richtung des Pfeils P (=Steckrichtung entlang der Steckachse S) das Halteelement 33 zum Aufweiten zu zwingen, so dass die innere Öffnung 35 ausreichend groß wird um den Flansch 20 des Steckers 2 hindurchtreten zu lassen. Nach dem Durchtritt des Flansches 20 des Steckers 2 reduziert sich der Durchmesser der inneren Öffnung 35 wieder aufgrund der Rückkehr des federelastischen teilringförmigen Halteelements 33 in seine Ausgangsposition. In dieser hintergreift es den Flansch 20, wie in Figur 2 zu sehen, und hält daher den Stecker in dem Steckverbinder 1 fest, verriegelt diesen somit in seiner Einsteckposition. Auch der Sicherungsring 4 weist im Querschnitt eine Keilform auf, somit ebenfalls eine angefaste Wandung 40. Mit dieser angefasten Wandung 40 wird auf das teilringförmige Halteelement 33 eine Kraft ausgeübt, wobei in jeder Position des teilringförmigen federelastischen Halteelementes 33 hier eine verstärkte gleichmäßige Kraft auf dieses ausgeübt werden kann, so dass stets ein besonders sicherer Halt des Steckers in dem Steckverbinder hierdurch erzeugt werden kann.

Wie aus Figur 1 besonders gut ersichtlich ist, wird nach dem Einschieben des Verbindungssteges 34 in den Spalt 14 hier eine Verdrehsicherung und zugleich Sperre des Verriegelungselements geschaffen, so dass im Betrieb beim Positionieren des Verriegelungselementes 3 in dieser Position der Stecker 2 nicht aus dem Steckverbinder entnommen werden kann, da das Halteelement nicht in eine aufgeweitete Position verdreht werden kann. Bei einer Ausführungsvariante ohne Steg 16 entfällt diese Sperre, so dass ein Drehen des Verriegelungselements 3 und somit Aufweiten des Halteelements in Zusammenwirken mit der Stützfläche 13 jederzeit möglich ist.

Um den Stecker 2 entnehmen zu können, wird das geschlossene Ringelement 30, somit das gesamte Verriegelungselement 3, axial in Richtung zu dem sich an den endseitigen Abschnitt 10 anschließenden Teil des Steckverbinders 1 bewegt, so dass der Verbindungssteg 34 in den unteren Teil der Spaltöffnung und somit in die Wandungsöffnung 15 gelangt. Da diese sich umfangsseitig erstreckt, ist es nun möglich, beim Drehen des geschlossenen Ringelementes 30 in Pfeilrichtung, also entgegen dem Uhrzeigersinn, die innere Öffnung 35 in dem teilringförmigen Halteelement 33 zu vergrößern, da sich das distale Ende 36 mit seiner Abstützfläche 39 an der Stützfläche 13 abstützt und sich der Verbindungssteg 34 in der Wandungsöffnung 15 in Richtung des Öffnungsanschlags 18 bewegt. Die innere Öffnung 35 wird dann so groß, dass der Flansch 20 des Steckers dort hindurchpasst und somit der Stecker entnommen werden kann.

Wird keine Drehkraft mehr auf das geschlossene Ringelement 30 in Gegenuhrzeigerrichtung ausgeübt, sondern dieses wieder entlastet, dreht sich automatisch das Ringelement 30 im Uhrzeigersinn wieder in seine Ausgangsposition zurück, so dass eine Verriegelungsposition für einen wiederum eingefügten Stecker vorhanden ist. Somit kann auf einfache Art und Weise ein Verriegeln eines eingefügten Steckers erfolgen und ebenso durch Drehen dieser wieder entnommen werden.

Im Unterschied zum Stand der Technik weist das Verriegelungselement 3 keine Hinterschneidungen auf, so dass ein einfaches Kunststoffwerkzeug für dessen Herstellung verwendet werden kann.

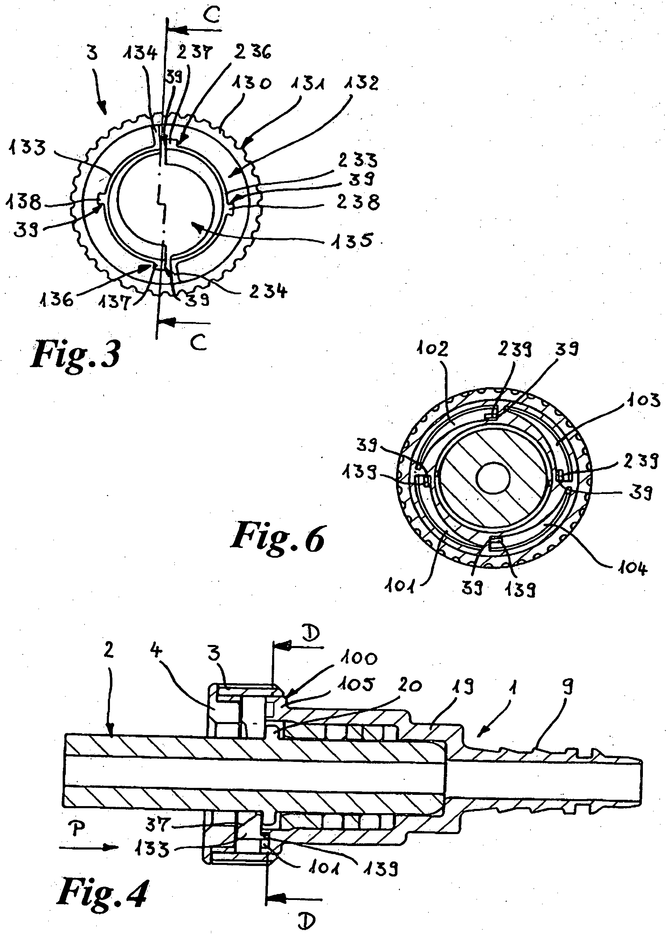

Figur 3 zeigt eine Draufsicht auf eine zweite Ausführungsform des Verriegelungselementes 3. Dieses weist, im Unterschied zu der Ausführungsform gemäß Figur 1 und 2, anstelle von einem teilringförmigen Halteelement nun zwei teilringförmige Halteelemente auf. Das erste teilringförmige Halteelement 133 ist über einen ersten Verbindungssteg 134 mit einem geschlossenen Ringelement 130 verbunden. Auch dieses weist wiederum eine geriffelte Außenfläche 131 auf. Die beiden teilringförmigen Halteelemente sind ebenfalls im Innenraum 132 des geschlossenen Ringelementes 130 angeordnet. Das zweite teilringförmige Halteelement 233 ist entsprechend dem ersten teilringförmigen Halteelement 133 ebenfalls über einen Verbindungssteg 234 an dem geschlossenen Ringelement 130 befestigt.

Wie der Draufsicht auf das Verriegelungselement 3 in Figur 3 besonders gut entnommen werden kann, weisen die beiden teilringförmigen Halteelemente 133, 233 eine sich über ihre jeweilige Längserstreckung hinweg ändernde Breitenerstreckung auf. Im Bereich des jeweiligen Verbindungssteges 134, 234 sind die beiden teilringförmigen Halteelemente schmaler ausgebildet und im distal endseitigen Bereich breiter. Am distalen Ende 136 bzw. 236 weist das jeweilige teilringförmige Halteelement ein nach außen auskragendes Abstützelement 137, 237 auf. Im mittleren Bereich der Längserstreckung des jeweiligen teilringförmigen Halteelementes 133, 233 ist jeweils ein weiteres nach außen auskragendes Abstützelement 138, 238 vorgesehen. Das jeweilige erste Abstützelement 137, 237 weist einen sich quer zur Erstreckung des jeweiligen teilringförmigen Halteelementes 133, 233 erstreckenden Abstützzapfen 139, 239 mit Abstützfläche 39 auf, der besonders gut der Figur 4 entnommen werden kann. Aber auch die beiden Abstützelemente 138, 238 sind mit einer jeweiligen Abstützfläche 39 bzw. mit einem jeweiligen Äbstützzapfen mit Abstützfläche versehen.

Entsprechend der Figur 4 greifen diese Abstützzapfen 139, 239 in entsprechende Nuten 101, 102, 103, 104 in einer Wandung 105 im endseitigen Abschnitt 100 des Steckverbinders 1 ein. Diese Nuten sind, wie insbesondere der in Figur 6 gezeigten Querschnittsansicht entlang der Linie D-D durch den Steckverbinder mit Verriegelungselement und Stecker in Figur 4 entnommen werden kann, mit einer sich verjüngenden Formgebung versehen. Die Abstützzapfen 139, 239 greifen in diese Nuten ein und werden aufgrund der ungleichmäßigen, nämlich sich verjüngenden Formgebung von diesen bei einer Drehbewegung des geschlossenen Ringelementes 130 in den Nuten geführt, so dass sich die beiden teilringförmigen Halteelemente voneinander entfernen bzw. sich aufeinander zu bewegen. Werden die beiden teilringförmigen Halteelemente voneinander entfernt, ist eine Entnahme des Steckers 2 aus der inneren Öffnung 135, die zwischen den beiden teilringförmigen Halteelementen 133, 233 gebildet wird, möglich. Auch das zweite Abstützelement 138, 238 ist jeweils mit einem Abstützzapfen 139, 239 quer zu dessen Erstreckung bzw. zur Erstreckung der teilringförmigen Halteelemente versehen, wobei auch diese Abstützzapfen jeweils in Nuten 101,103 eingreifen und sich darin mit ihren Abstützflächen 39 abstützen.

Die vier Abstützzapfen 139, 239 sind der Querschnittsansicht in Figur 6 gut zu entnehmen. Diese liegen jeweils an dem am weitesten geöffneten Ende der jeweiligen Nuten 101, 102, 103, 104 der Wandung 105 des endseitigen Abschnitts 100 des Steckverbinders 1 an der dort vorgesehenen Stützfläche an.

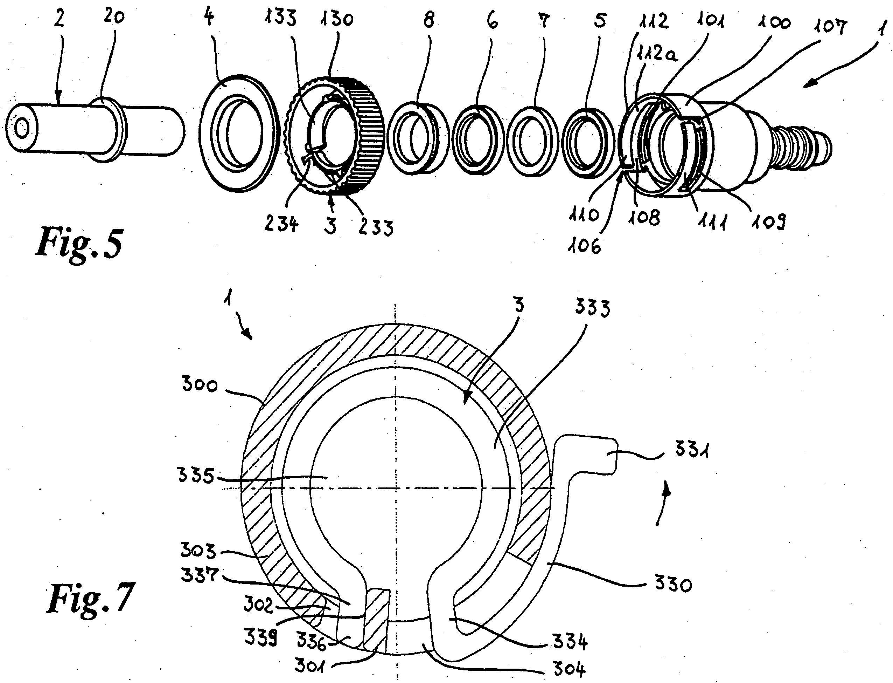

Wie der Explosionsansicht in Figur 5 besonders gut entnommen werden kann, sind analog zu dem Aufbau des endseitigen Abschnitts 10 des Steckverbinders 1 gemäß der Figur 1 auch hier Stege 110, 111 mit benachbart angeordneten Wandungsöffnungen 108, 109 und zwischen Steg und Wandung angeordneten Spalten 106, 107 vorgesehen, um die jeweiligen Verbindungsstege 134, 234 aufnehmen zu können, Die Montage und die Verdrehsicherungsposition im Betrieb erfolgen analog zu dem vorstehend zu den Figuren 1 und 2 Beschriebenen.

Zur Sicherung des Verriegelungselementes 3 an dem endseitigen Abschnitt 100 ist ebenfalls das Sicherungselement 4 aufgefügt, das wiederum an der Frontfläche 112 bzw. inneren Kontaktfläche 112a des endseitigen Abschnitts 100 beispielsweise über Laserschweißen, Reibscheißen, Rast- oder Verhakungselemente etc. befestigt wird, wie vorstehend bereits zur Kontaktfläche 17a ausgeführt.

Die beiden teilringförmigen Halteelemente 133, 233 sind im Querschnitt ebenfalls keilförmig, wie dies für das teilringförmige Halteelement 133 insbesondere der Figur 4 entnommen werden kann. Eine in Steckrichtung P des Steckers 2 gerichtete Wandung des Halteelements 133, 233 ist konisch verjüngt, wie mit der Fase 37 dargestellt. Im Unterschied zu der Ausführungsform des Sicherungsrings 4 gemäß Figur 1 und 2 weist der Sicherungsring 4 entsprechend der Figur 4 keine angefaste Wandung in Richtung des Verriegelungselementes 3 auf, sondern ist hier mit einer gleichmäßig ebenen Fläche versehen, auf der sich das jeweilige teilringförmige Halteelement 133, 233 abstützt. Gleichwohl wird beim Drehen des Verriegelungselementes zum Entfernen des Steckers 2 dieses solange wie möglich gegen den Flansch 20 des Steckers gedrückt, so dass der Stecker innerhalb des Steckverbinders 1 besonders sicher gehalten werden kann. Es ist aber auch möglich, den Sicherungsring 4 bei der Ausführungsform nach Figur 4 mit einem keilförmigen Querschnitt zu versehen, entsprechend der in Figur 2 gezeigten angefasten Wandung 40.

Aufgrund der besonderen Formgebung nicht nur der teilringförmigen Halteelemente 133, 233, sondern auch der Nuten 101, 102, 103, 104 ist das Verriegelungselement bei dieser Ausführungsform so ausgebildet, dass es sich nicht selbständig lösen kann, was einen besonders sicheren Halt eines eingefügten Steckers bedeutet.

Figur 7 zeigt eine weitere Ausführungsvariante des Verriegelungselementes 3 in Montage am endseitigen Abschnitt 300 eines Steckverbinders 1. Das Verriegelungselement 300 weist hier kein geschlossenes Ringelement auf, sondern lediglich ein teilringförmiges äußeres Element 330. Das teilringförmige äußere Element 330 erstreckt sich lediglich etwa in einem Winkelbereich von bspw. 90 ° auf der Außenseite des endseitigen Abschnitts 300. Es ist einstückig mit einem Verbindungssteg 334, der seinerseits in ein federelastisches teilringförmiges Halteelement 333 übergeht. Das teilringförmige Halteelement 333 weist an seinem distalen Ende 336 einen abstehenden Stützabschnitt 337 auf. Der distale Stützabschnitt stützt sich mit seiner Abstützfläche 339 an einem Stützelement 301 des endseitigen Abschnitts 300 ab. Es liegt dabei in einer Umfangsöffnung 302 der Umfangswandung 303 des endseitigen Abschnitts 300. Auf der gegenüberliegenden Seite des Stützelements 301 erstreckt sich ebenfalls eine längliche Umfangsöffnung bzw. Wandungsöffnung 304, in der der Verbindungssteg 334 angeordnet ist. Auch dieses Verriegelungselement 3 wird axial montiert und ist dadurch nach der Montage verliersicher.

Endseitig an dem teilringförmigen äußeren Element 330 ist ein Betätigungselement 331 angeordnet. Dieses ragt nach außen hin weg, also weg von dem teilringförmigen Halteelement 333, so dass es von außen betätigt werden kann, also von außerhalb des Steckverbinders. Bei Bewegen des Betätigungselementes 331 in Richtung des Pfeils, also entgegen dem Uhrzeigersinn, stützt sich der Stützabschnitt 337 mit seiner Abstützfläche 339 am distalen Ende 336 des teilringförmigen Halteelementes 333 an dem Stützelement 301 des endseitigen Abschnitts ab, so dass sich die innere Öffnung 335 vergrößert, wobei ein eingefügter Stecker 2 mit Flansch 20 (nicht dargestellt) durch die innere Öffnung des teilringförmigen Haltelementes 333 entnommen werden kann. Wird das Betätigungselement 331 wieder losgelassen, bewegt sich aufgrund der Federwirkung des gesamten Verriegelungselementes dieses wieder in seine Ausgangsposition zurück, so dass ein auskragender Flansch 20 des Steckers wiederum hintergriffen und somit der Stecker in dem Steckverbinder gesichert werden kann.

Bei der Ausführungsform des beheizbaren Steckverbinders 1 gemäß Figur 8 und 9 ist nicht nur die bereits erwähnte lasertransparente Hülse 90 vorgesehen, sondern auch aüßenseitige Gewindestege 190 mit dazwischen angeordneten Nuten 191 zum Einfügen und Halten von Heizdrähten oder anderweitigen Einrichtungen zum Beheizen des Steckverbinders bzw. des durch diesen nach dessen Anschluss an eine Medienleitung und z. B. ein Kraftfahrzeugaggregat hindurch strömenden Mediums. Anstelle der zylindrischen Hülse 90 zum Verbinden durch Laserschweißen kann diese auch zum Verbinden durch Reibschweißen ausgebildet sein, wobei sie dann vorteilhaft konisch zuläuft. Die lasertransparente Hülse 90 ist zum Einschieben einer Medienleitung ausgebildet, so dass dadurch auch eine besonders gute Abdichtung nach außen möglich ist, da das Ende der Medienleitung dann geschützt und abgedichtet innerhalb des Steckverbinders aufgenommen ist.

Das Verriegelungselement und der Steckverbinder können beispielsweise aus einem Kunststoff oder einem Kunststoffverbundmaterial bestehen.

Neben den im Vorstehenden genannten und in den Figuren gezeigten Ausführungsvarianten von Verriegelungselementen und Steckverbindern können noch zahlreiche weitere gebildet werden, bei denen jeweils das Haltelement zumindest ein in das Innere des äußeren Elementes hineinragendes federelastisches teilringförmiges Halteelement ist, das über einen Verbindungssteg mit dem äußeren Element verbunden ist und zumindest einen Abstützabschnitt und/oder eine Abstützfläche aufweist zum Abstützen an dem Steckverbinder beim Entriegeln des Verriegelungselements.

### Bezugszeichenliste

- 1: Steckverbinder
- 2: Stecker
- 3: Verriegelungselement
- 4: Sicherungsring
- 5: Dichtring
- 6: Dichtring
- 7: Distanzbuchse
- 8: Abschlussbuchse
- 9: Dornprofl
- 10: endseitiger Abschnitt
- 11: Umfangswandung
- 12: verdickter Teilbereich
- 13: Stützfläche
- 14: Spalt
- 15: Wandungsöffnung
- 16: Steg
- 17: Frontfläche
- 17a: Kontaktfläche
- 18: Öffnungsanschlag
- 19: Gehäuse
- 20: Flansch
- 30: geschlossenes Ringelement
- 31: geriffelte Außenfläche
- 32: Innenraum
- 33: teilringförmiges Halteelement
- 34: Verbindungssteg
- 35: innere Öffnung
- 36: distales Ende
- 37: Fase
- 38: Stützfläche
- 39: Abstützfläche
- 40: angefaste Wandung
- 90: lasertransparente Hülse
- 100: endseitiger Abschnitt
- 101: erste Nut
- 102: zweite Nut
- 103: dritte Nut
- 104: vierte Nut
- 105: Wandung
- 106: erster Spalt
- 107: zweites Spalt
- 108: erste Wandungsöffnung
- 109: zweite Wandungsöffnung
- 110: erster Steg
- 111: zweiter Steg
- 112: Frontfläche
- 112a: innere Köntaktfläche
- 130: geschlossenes Ringelement
- 131: geriffelte Außenfläche
- 132: Innenraum
- 133: erstes teilringförmiges Halteelement
- 134: Verbindungssteg
- 135: innere Öffnung
- 136: distales Ende
- 137: Abstützelement
- 138: zweites Abstützelement
- 139: Abstützzapfen
- 190: Gewindesteg
- 191: Nut
- 233: zweites teilringförmiges Halteelement
- 234: Verbindungssteg
- 236: distales Ende
- 237: Abstützelement
- 238: zweites Abstützelement
- 239: Abstützzapfen
- 300: endseitiger Abschnitt
- 301: Stützelement
- 302: Umfangsöffnung
- 303: Umfangswandung
- 304: Wandungsöffnung
- 330: teilringförmiges äußeres Element
- 331: Betätigungselement
- 333: teilringförmiges Halteelement
- 334: Verbindungssteg
- 335: innere Öffnung
- 336: distales Ende
- 337: Stützabschnitt
- 339: Abstützfläche

## Patentansprüche

1. Verriegelungselement (3) für einen Steckverbinder (1), mit einem äußeren Element (30,130,330) zum Anordnen auf der Außenseite eines Abschnitts (10,100,300) des Steckverbinders (1), wobei ein in das Innere des äußeren Elements (30,130,330) hineinragendes Halteelement vorgesehen ist und das Halteelement zumindest ein federelastisches teilringförmiges Halteelement (33,133,233,333) ist, wobei
das äußere Element als geschlossenes Ringelement (30,130) oder als teilringförmiges Element (330) ausgebildet ist und das Halteelement (33,133,233,333) über einen Verbindungssteg (34,134,234,334) mit dem äußeren Element (30,130,330) verbunden ist und zumindest einen Abstützabschnitt und/oder eine Abstützfläche (39,339) zumindest an dem von dem Verbindungssteg (34,134,234,334) entfernten, distalen Ende (36,136,236,336) des Halteelements (33,133,233,333) aufweist zum Abstützen an dem Steckverbinder (1) beim Entriegeln des Verriegelungselements (3),
**dadurch gekennzeichnet, dass**
zwei teilringförmige Halteelemente (133,233) vorgesehen sind, die über einen jeweiligen Verbindungssteg (134,234) mit dem äußeren Element (130) verbunden sind und wobei zum Vergrößern einer zwischen den teilringförmigen Halteelementen (33,133,233,333) gebildeten inneren Öffnung (35,135,335) durch Aufweiten der teilringförmigen Halteelemente (33,133,233,333) sich die Abstützfläche (39,339) oder der Abstützabschnitt an einer Fläche eines Stützelementes (100) des Steckverbinders (1) abstützt.

2. Verriegelungselement (3) nach Anspruch 1,
**dadurch gekennzeichnet, dass**
das Haltelement (33, 133, 233, 333) im Bereich zwischen dem Verbindungssteg (34, 134, 234, 334) und seinem distalen Ende (36, 136, 236, 336) zumindest eine Abstützfläche (39) oder zumindest einen Abstützabschnitt aufweist.

3. Verriegelungselement (3) nach einem der vorstehenden Ansprüche,
**dadurch gekennzeichnet, dass**
sich das teilringförmige Halteelement (34) über einen Winkel von mehr als 30 ° erstreckt.

4. Verriegelungselement (1) nach einem der vorstehenden Ansprüche,
dadurch gekenntzeichnet, dass
die beiden teilringförmigen Halteelemente (133,233) mit einer über ihre Längserstreckung hinweg ungleichmäßigen Breitenerstreckung versehen sind.

5. Verriegelungselement (1) nach Anspruch 4,
**dadurch gekennzeichnet, dass**
die beiden teilringförmigen Halteelemente (133,233) zumindest endseitig, insbesondere endseitig und im mittleren Bereich ihrer Längserstreckung, mit einem Abstützelement (137,138,237,238) mit Abstützfläche (39,339) und/oder einem Abstützzapfen (139,239) mit Abstützfläche (39) zum Eingreifen in eine entsprechend geformte Nut (101,102,103,104), Spur oder einen Rücksprung in dem Steckverbinder (1) versehen sind.

6. Verriegelungselement (3) nach einem der vorstehenden Ansprüche,
**dadurch gekennzeichnet, dass**
das oder die teilringförmigen Halteelement(e) (33,133,233,333) mit einer quer zu ihrer Längserstreckung gerichteten Fase (37) versehen sind.

7. Verriegelungselement (1) nach einem der vorstehenden Ansprüche,
**dadurch gekennzeichnet, dass**
das äußere Element als geschlossenes Ringelement (30,130) ausgebildet ist.

8. Verriegelungselement (3) nach Anspruch 7,
**dadurch gekennzeichnet, dass**
das Ringelement (30,130) auf seiner Außenseite mit einer das rutschfeste Angreifen verbessernden Oberfläche (31, 131) versehen ist, insbesondere mit einer geriffelten und/oder genoppten und/oder mit Überhöhungen versehenen Oberfläche versehen ist.

9. Verriegelungselement (3) nach einem der Ansprüche 1 bis 6,
**dadurch gekennzeichnet, dass**
das äußere Element (330) teilringförmig ausgebildet und an dem äußeren Element ein Betätigungselement (331) angeordnet ist.

10. Steckverbinder (1) mit zumindest einem Verriegelungselement (3) nach einem der vorstehenden Ansprüche,
**dadurch gekennzeichnet, dass**
der Steckverbinder (1) mit einem von dem Verriegelungselement (3) umgreifbaren Abschnitt (10,100,300) versehen ist, der zumindest eine Schlitzöffnung (14,106,107) zum Einführen eines Verbindungsstegs (34,134,234,334) zwischen äußerem Element (30,130,330) und teilringförmigem Halteelement (33,133,233,333) sowie zumindest ein Stützelement (12,13,337) zum Abstützen zumindest des distalen Endes (36,136,236,336) des jeweiligen teilringförmigen Halteelements (33,133,233,333) oder einer Abstützfläche (39,339) und/oder eines Abstützabschnitts zwischen Verbindungssteg und distalem Ende des Halteelements (33, 133, 233, 333) aufweist.

11. Steckverbinder (1) nach Anspruch 10,
**dadurch gekennzeichnet, dass**
zumindest eine längliche Wandungsöffnung (15,108,109,304) in Verbindung mit der Schlitzöffnung (14,106,107) vorgesehen ist zum Einfügen des jeweiligen Verbindungsstegs (34,134,234,334) und zum Bewegen des Verbindungsstegs (34,134,234,334) innerhalb und entlang der Wandungsöffnung (15,108,109,1304).

12. Steckverbinder (1) nach Anspruch 10 oder 11.
**dadurch gekennzeichnet, dass**
zumindest ein Sicherungsring (4) zum axialen Sichern des Verriegelungselements (3) an dem Steckverbinder (1) vorgesehen ist, insbesondere der Sicherungsring (4) zumindest eine in Richtung des teilringförmigen Halteelements (33,133,233,333) weisende angefaste Wandung (40) aufweist, an der das Halteelement anlägerbar ist.

13. Steckverbinder (1) nach einem der Ansprüche 10 bis 12,
**dadurch gekennzeichnet, dass**
sich einseitig verjüngende und mit einer Stützfläche versehene Nuten (101,102,103,104), Spuren oder Rücksprünge vorgesehen sind, insbesondere vier Nuten, wobei Abstützelemente oder Abstützzapfen (139,239) der teilringförmigen Halteelemente (33,133,233,333) in die Stützflächen eingreifbar sind oder eingreifen.

14. Steckverbinder (1) nach einem der Ansprüche 10 bis 13,
**dadurch gekennzeichnet, dass**
der Steckverbinder beheizbar ausgebildet ist.

## Claims

1. Locking element (3) for a plug connector (1), said element having an outer element (30, 130, 330) for arrangement on the outer side of a section (10, 100, 300) of said plug connector (1), wherein a holding element which projects into the interior of the outer element (30, 130, 330) is provided and said holding element is at least one resilient, partially annular holding element (33, 133, 233, 333), wherein the outer element is constructed as a closed annular element (30, 130) or as a partially annular element (330) and the holding element (33, 133, 233, 333) is connected to the outer element (30, 130, 330) via a connecting web (34, 134, 234, 334) and has at least one supporting section and/or a supporting face (39, 339), at least on that distal end (36, 136, 236, 336) of the holding element (33, 133, 233, 333) which is remote from the connecting web (34, 134, 234, 334), for support on the plug connector (1) when unlocking the locking element (3),
**characterised in that**
two partially annular holding elements (133, 233) are provided, which are connected to the outer element (130) via a connecting web (134, 234) in each case, and wherein, for the purpose of enlarging an inner aperture (35, 135, 335), which is formed between the partially annular holding elements (33, 133, 233, 333), by expanding said partially annular holding elements (33, 133, 233, 333), the supporting face (39, 339) or the supporting section is supported on one face of a supporting element (100) belonging to the plug connector (1).

2. Locking element (3) according to Claim 1,
**characterised in that**
the holding element (33, 133, 233, 333) has, in the region between the connecting web (34, 134, 234, 334) and its distal end (36, 136, 236, 336), at least one supporting face (39) or at least one supporting section.

3. Locking element (3) according to one of the preceding claims,
**characterised in that**
the partially annular holding element (34) extends over an angle of more than 30°.

4. Locking element (3) according to one of the preceding claims,
**characterised in that**
the two partially annular holding elements (133, 233) are provided with an extension in width which is nonuniform over their longitudinal extension.

5. Locking element (3) according to Claim 4,
**characterised in that**
the two partially annular holding elements (133, 233) are provided, at least at the end, particularly at the end and in the central region of their longitudinal extension, with a supporting element (137, 138, 237, 238) having a supporting face (39, 339) and/or with a supporting peg (139, 239) having a supporting face (39), for engagement in a correspondingly shaped groove (101, 102, 103, 104), track or offset in the plug connector (1).

6. Locking element (3) according to one of the preceding claims,
**characterised in that**
the partially annular holding element or elements (33, 133, 233, 333) is/are provided with a chamfer (37) which is directed transversely to its/their longitudinal extension.

7. Locking element (3) according to one of the preceding claims,
**characterised in that**
the outer element is constructed as a closed annular element (30, 130).

8. Locking element (3) according to Claim 7,
**characterised in that**
the annular element (30, 130) is provided, on its outer side, with a surface (31, 131) that improves the non-slip handling, in particular with a surface which is knurled and/or knobbly and/or provided with elevations.

9. Locking element (3) according to one of Claims 1 to 6,
**characterised in that**
the outer element (330) is of partially annular construction and an actuating element (331) is arranged on said outer element.

10. Plug connector (1) having at least one locking element (3) according to one of the preceding claims,
**characterised in that**
said plug connector (1) is provided with a section (10, 100, 300) around which the locking element (3) can engage and which has at least one slot-type aperture (14, 106, 107) for the introduction of a connecting web (34, 134, 234, 334) between the outer element (30, 130, 330) and the partially annular holding element (33, 133, 233, 333), and also at least one supporting element (12, 13, 337) for supporting at least the distal end (36, 136, 236, 336) of the partially annular holding element (33, 133, 233, 333) in each case, or a supporting face (39, 339) and/or a supporting section between the connecting web and the distal end of the holding element (33, 133, 233, 333).

11. Plug connector (1) according to Claim 10,
**characterised in that**
at least one elongated wall aperture (15, 108, 109, 304) in communication with the slot-type aperture (14, 106, 107) is provided for inserting the connecting web (34, 134, 234, 334) in each case and for moving said connecting web (34, 134, 234, 334) within and along the wall aperture (15, 108, 109, 304).

12. Plug connector (1) according to Claim 10 or 11,
**characterised in that**
at least one securing ring (4) for axially securing the locking element (3) on the plug connector (1) is provided, in particular said securing ring (4) has at least one chamfered wall (40) which points towards the partially annular holding element (33, 133, 233, 333) and to which said holding element can be attached.

13. Plug connector (1) according to one of Claims 10 to 12,
**characterised in that**
grooves (101, 102, 103, 104), tracks or offsets, which taper at one end and are provided with a supporting face, are provided, in particular four grooves, wherein supporting elements or supporting pegs (139, 239) belonging to the partially annular holding elements (33, 133, 233, 333) can be engaged, or engage, in the supporting faces.

14. Plug connector (1) according to one of Claims 10 to 13,
**characterised in that**
the plug connector is constructed so as to be capable of being heated.

## Revendications

1. Elément de verrouillage (3) pour un connecteur à fiche (1), comprenant un élément (30, 130, 330) extérieur destiné à être disposé sur le côté extérieur d'une section (10, 100, 300) du connecteur à fiche (1), sachant qu'un élément de maintien dépassant dans l'intérieur de l'élément (30, 130, 330) extérieur est prévu et que l'élément de maintien est au moins un élément de maintien (33, 133, 233, 333) élastique comme un ressort présentant une forme partiellement annulaire, sachant que
l'élément extérieur est réalisé sous a forme d'un élément annulaire (30, 130) fermé ou sous la forme d'un élément (330) présentant une forme partiellement annulaire et que l'élément de maintien (33, 133, 233, 333) est relié par l'intermédiaire d'une entretoise de liaison (34, 134, 234, 334) à l'élément extérieur (30, 130, 330) et présente au moins une section d'appui et/ou une face d'appui (39, 339) au moins au niveau de l'extrémité (36, 136, 236, 336) distale, éloignée de l'entretoise de liaison (34, 134, 234, 334), de l'élément de maintien (33, 133, 233, 333) aux fins de l'appui au niveau du connecteur à fiche (1) lors du déverrouillage de l'élément de verrouillage (3), **caractérisé en ce que** sont prévus deux éléments de maintien (133, 233) présentant une forme partiellement annulaire, qui sont reliés par l'intermédiaire d'une entretoise de liaison (134, 234) respective, à l'élément extérieur (130), et **en ce que** la face d'appui (39, 339) ou la section d'appui prennent appui au niveau d'une face d'un élément de soutien (100) du connecteur à fiche (1) afin d'agrandir une ouverture (35, 135, 335) intérieure formée entre les éléments de maintien (33, 133, 233, 333) présentant une forme partiellement annulaire en élargissant les éléments de maintien (33, 133, 233, 333) présentant une forme partiellement annulaire.

2. Elément de verrouillage (3) selon la revendication 1,
**caractérisé en ce**
**que** l'élément de maintien (33, 133, 233, 333) présente, dans la zone entre l'entretoise de liaison (34, 134, 234, 334) et son extrémité (36, 136, 236, 336) distale, au moins une face d'appui (39) ou au moins une section d'appui.

3. Elément de verrouillage (3) selon l'une quelconque des revendications précédentes,
**caractérisé en ce**
**que** l'élément de maintien (34) présentant une forme partiellement annulaire s'étend sur un angle supérieur à 30°.

4. Elément de verrouillage (1) selon l'une quelconque des revendications précédentes,
**caractérisé en ce**
**que** les deux éléments de maintien (133, 233) présentant une forme partiellement annulaire sont pourvus d'une extension en largeur irrégulière allant au-delà de leur extension longitudinale.

5. Elément de verrouillage (1) selon la revendication 4,
**caractérisé en ce**
**que** les deux éléments de maintien (133, 233) présentant une forme partiellement annulaire sont pourvus au moins du côté d'une extrémité, en particulier du côté d'une extrémité et dans la zone centrale de leur extension longitudinale, d'un élément d'appui (137, 138, 237, 238) pourvu d'une face d'appui (39, 339) et/ou d'un tourillon d'appui (139, 239) pourvu d'une face d'appui (39) destinés à venir en prise avec une rainure (101, 102, 103, 104) formée de manière correspondante, avec une piste ou un retrait dans le connecteur à fiche (1).

6. Elément de verrouillage (3) selon l'une quelconque des revendications précédentes,
**caractérisé en ce**
**que** l'élément de maintien ou les éléments de maintien (33, 133, 233, 333) présentant une forme partiellement annulaire sont pourvus d'un chanfrein (37) orienté de manière transversale par rapport à leur extension longitudinale.

7. Elément de verrouillage (1) selon l'une quelconque des revendications précédentes,
**caractérisé en ce que**
l'élément extérieur est réalisé sous la forme d'un élément annulaire (30, 130) fermé.

8. Elément de verrouillage (3) selon la revendication 7,
**caractérisé en ce**
**que** l'élément annulaire (30, 130) est pourvu sur son côté extérieur d'une surface (31, 131) améliorant l'attaque antidérapante, est pourvu en particulier d'une surface cannelée et/ou pastillée et/ou pourvue de parties surélevées.

9. Elément de verrouillage (3) selon l'une quelconque des revendications 1 à 6,
**caractérisé en ce**
**que** l'élément extérieur (330) est réalisé de manière à présenter une forme partiellement annulaire, et en ce qu'un élément d'actionnement (331) est disposé au niveau de l'élément extérieur.

10. Connecteur à fiche (1) pourvu au moins d'un élément de verrouillage (3) selon l'une quelconque des revendications précédentes,
**caractérisé en ce**
**que** le connecteur à fiche (1) est pourvu d'une section (10, 100, 300) pouvant être entourée de l'élément de verrouillage (3), laquelle présente au moins une ouverture formant une entaille (14, 106, 107) servant à introduire une entretoise de liaison (34, 134, 234, 334) entre l'élément extérieur (30, 130, 330) et l'élément de maintien (33, 133, 233, 333) présentant une forme partiellement annulaire ainsi qu'au moins un élément de soutien (12, 13, 337) servant à l'appui au moins de l'extrémité (36, 136, 236, 336) distale de l'élément de maintien (33, 133, 233, 333) respectif présentant une forme partiellement annulaire ou d'une face d'appui (39, 339) et/ou d'une section d'appui entre l'entretoise de liaison et l'extrémité distale de l'élément de maintien (33, 133, 233, 333).

11. Connecteur à fiche (1) selon la revendication 10,
**caractérisé en ce**
**qu'**au moins une ouverture de paroi (15, 108, 109, 304) allongée combinée à l'ouverture formant une entaille (14, 106, 107) se destine à être assemblée à l'entretoise de liaison (34, 134, 234, 334) respective et à déplacer l'entretoise de liaison (34, 134, 234, 334) à l'intérieur et le long de l'ouverture de paroi (15, 108, 109, 304).

12. Connecteur à fiche (1) selon la revendication 10 ou 11,
**caractérisé en ce**
**qu'**au moins une bague de blocage (4) est prévue afin de bloquer de manière axiale l'élément de verrouillage (3) au niveau du connecteur à fiche (1), en particulier en ce que la bague de blocage (4) présente au moins une paroi (40) chanfreinée pointant en direction de l'élément de maintien (33, 133, 233, 333) présentant une forme partiellement annulaire, au niveau de laquelle l'élément de maintien peut être monté.

13. Connecteur à fiche (1) selon l'une quelconque des revendications 10 à 12,
**caractérisé en ce**
**que** des rainures (101, 102, 103, 104), des pistes ou des retraits se rétrécissant d'un côté et pourvus d'une face de soutien sont prévus, en particulier quatre rainures, des éléments d'appui ou des tourillons d'appui (139, 239) des éléments de maintien (33, 133, 233, 333) présentant une forme partiellement annulaire pouvant venir en prise ou venant en prise avec les faces de soutien.

14. Connecteur à fiche (1) selon l'une quelconque des revendications 10 à 13,
**caractérisé en ce**
**que** le connecteur à fiche est réalisé de manière à pouvoir être chauffé.
